# EUROPEAN PATENT APPLICATION

(11) **EP 2 498 075 A2**
(43) Date of publication of application: **12.09.2012**
(21) Application number: 12158743.0
(22) Date of filing: 09.03.2012
(51) Int. Cl.: G01L 9/00

(54) **Semiconductor device, strain gauge, pressure sensor, and method of forming semiconductor device**

(30) Priority: 10.03.2011 JP 2011052261; 03.02.2012 JP 2012021571
(71) Applicant: Yokogawa Electric Corporation, Tokyo 180-8750 (JP)
(72) Inventor: Takenaka, Kazuma, Tokyo 180-8750 (JP); Shintani, Yukihiro, Tokyo 180-8750 (JP)
(74) Representative: Henkel, Breuer & Partner

(57) **Abstract**

A semiconductor device may include a piezoresistive body of which a resistance value is changed by action of an external force. The piezoresistive body may include a surface layer of diamond. The surface layer may be hydrogen-terminated.

## Description

### BACKGROUND OF THE INVENTION

### Field of the Invention

The present invention relates to a semiconductor device which uses a piezoresistive body using change in a resistance value when an external force is applied to a semiconductor material.

Priority is claimed on Japanese Patent Application No. 2011-052261, filed March 10, 2011, and Japanese Patent Application No. 2012-021571, filed February 3, 2012, the contents of which are incorporated herein by reference.

### Description of the Related Art

All patents, patent applications, patent publications, scientific articles, and the like, which will hereinafter be cited or identified in the present application, will hereby be incorporated by reference in their entirety in order to describe more fully the state of the art to which the present invention pertains.

Japanese Examined Patent Application, Second Publication No. H5 (1993)-13451 discloses a pressure detector using a strain gauge configured by forming a diamond semiconductor film on a diamond single crystalline plate in a diaphragm as a strain gauge which generates an output signal caused by strain of the diaphragm.

In the pressure detector of the related art, since a doped diamond introduced with impurities such as boron (B) is used as the diamond semiconductor film constituting a piezoresistive body, the temperature dependence is large and the forming process becomes complicated.

### SUMMARY

The present invention provides a semiconductor device and the like having a piezoresistive body with reduced temperature dependence and easy forming.

A semiconductor device may include: a piezoresistive body of which a resistance value is changed by action of an external force. The piezoresistive body may include a surface layer of diamond. The surface layer may be hydrogen-terminated.

The diamond may be insulating diamond. A portion of the surface layer may be hydrogen-terminated.

A strain gauge may include: a silicon substrate of which a film of diamond is formed on a surface; and a piezoresistive body formed on the silicon substrate to extend in a straight line shape, of which a resistance value is changed by action of an external force. The piezoresistive body may include a surface layer of the diamond. The surface layer may be hydrogen-terminated.

The diamond may be insulating diamond. A portion of the surface layer may be hydrogen-terminated.

The strain gauge further include: a field effect transistor (FET). A source electrode of the FET may be arranged in a first end of the piezoresistive body. A drain electrode of the FET may be arranged in a second end of the piezoresistive body. A gate electrode of the FET may be arranged between the first end and the second end of the piezoresistive body.

The gate electrode may control an amount of holes of the piezoresistive body.

A pressure sensor may include: a diaphragm deformed under pressure; and a strain gauge including a piezoresistive body of which a resistance value is changed based on an amount of the deformation of the diaphragm. The piezoresistive body may include a surface layer of diamond. The surface layer may be hydrogen-terminated.

The diamond may be insulating diamond. A portion of the surface layer may be hydrogen-terminated.

The strain gauge may include a field effect transistor (FET). A source electrode of the FET may be arranged in a first end of the piezoresistive body. A drain electrode of the FET may be arranged in a second end of the piezoresistive body. A gate electrode of the FET may be arranged between the first end and the second end of the piezoresistive body.

The pressure sensor may further include: a temperature sensor which is formed of doped diamond and detects a temperature of the piezoresistive body.

The pressure sensor may further include: a protection layer configured to cover a surface of the diamond.

The gate electrode may control an amount of holes of the piezoresistive body.

A method of forming a semiconductor device may include a piezoresistive body of which a resistance value is changed by action of an external force. The method may include: hydrogen-terminating at least a portion of a surface layer of diamond with hydrogen plasma; forming the hydrogen-terminated surface layer as a piezoresistive body; and obtaining an electrical connection to the piezoresistive body through a metal film.

The method may further include: forming a protection layer that protects a hydrogen-termination structure of a surface of the piezoresistive body.

A method of forming a semiconductor device may include a piezoresistive body of which a resistance value is changed by action of an external force. The method may include: hydrogen-terminating at least a portion of a surface layer of diamond with hydrogen plasma; forming a piezoresistive body serving as a hole channel of a field effect transistor (FET) on the hydrogen-terminated surface layer; obtaining an electrical connection to the piezoresistive body through a metal film; and forming a gate electrode which controls an amount of holes of the piezoresistive body on the hole channel.

The method may further include: forming a protection layer that protects a hydrogen-termination structure of a surface of the piezoresistive body.

According to a semiconductor device of the present invention, since a surface of a hydrogen-terminated diamond serving as a semiconductor is included, it is possible to suppress temperature dependence and simplify a forming process.

According to a strain gauge of the present invention, since a surface of a hydrogen-terminated diamond serving as a semiconductor is included, it is possible to suppress temperature dependence and simplify a forming process.

According to a pressure sensor of the present invention, since a surface of a hydrogen-terminated diamond serving as a semiconductor is included, it is possible to suppress the temperature dependence and simplify the forming process.

### BRIEF DESCRIPTION OF THE DRAWINGS

The above features and advantages of the present invention will be more apparent from the following description of certain preferred embodiments taken in conjunction with the accompanying drawings, in which:
FIG. 1A is a plan view illustrating a configuration example of a strain gauge using a piezoresistive body;
FIG. 1B is a cross-sectional view taken along line Ib-Ib of FIG. 1A;
FIG. 1C is a partially enlarged view of FIG. 1B;
FIGS. 2A and 2B are views illustrating a configuration example of a pressure sensor in accordance with a first preferred embodiment of the present invention;
FIGS. 3A and 3B are views illustrating an example in which a diamond thermistor is added as a temperature sensor to the pressure sensor shown in FIGS. 2A and 2B;
FIG. 4A is a cross-sectional view illustrating an example in which the pressure sensor shown in FIGS. 2A and 2B is provided with a protection layer;
FIG. 4B is a cross-sectional view illustrating an example in which the pressure sensor shown in FIGS. 3A and 3B is provided with a protection layer;
FIGS. 5A, 5B and 5C are views illustrating a configuration example of a strain gauge using a piezoresistive body;
FIGS. 6A and 6B are views illustrating a configuration of a pressure sensor using a piezoresistive body;
FIGS. 7A and 7B are views illustrating an example in which a diamond thermistor is added as a temperature sensor to the pressure sensor shown in FIGS. 6A and 6B;
FIG. 8A is a cross-sectional view illustrating an example in which the pressure sensor shown in FIGS. 6A and 6B is provided with a protection layer;
FIG. 8B is a cross-sectional view illustrating an example in which the pressure sensor shown in FIGS. 7A and 7B is provided with a protection layer;
FIG. 9A is a cross-sectional view illustrating a configuration example of a diaphragm in accordance with other preferred embodiment;
FIG. 9B is a view illustrating other configuration of a piezoresistive body in accordance with other preferred embodiment;
FIGS. 10A to 10T are views illustrating a forming process of a semiconductor device having a piezoresistive body; and
FIGS. 11A to 11Y are views illustrating a forming process of a hydrogen-terminated diamond piezo FET.

### DETAILED DESCRIPTION OF THE PREFERRED EMBODIMENTS

The present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

A semiconductor device and the like in accordance with a first preferred embodiment of the present invention will be described.

A piezoresistive body applied to the present invention uses a semiconductor property of a hydrogen-terminated diamond surface.

The hydrogen-terminated diamond is a diamond having a surface structure terminated with hydrogen atoms in a diamond surface. The diamond is one of carbon allotropes and an inside of the crystal is composed of covalent bonds between carbon atoms. A surface structure of the diamond synthesized by a chemical vapor deposition (CVD) method basically becomes a hydrogen-terminated state since the diamond is synthesized under an environment containing a raw material gas, such as methane, and hydrogen gas which suppresses growth of graphite. It is possible to realize hydrogen-termination of the diamond surface by subjecting the diamond surface having oxygen termination to hydrogen plasma processing or to heating in a hydrogen stream. The hydrogen-terminated diamond has a p-type conductivity, and use of the hydrogen-terminated diamond has been attempted in a gas sensor, MESFET, MISFET, an electron emission source, and the like by utilizing such a semiconductor property.

A piezoresistive effect is an effect in which resistivity is changed when stress or strain is applied to a crystal. For example, when an external force is applied to a semiconductor material such as single crystalline silicon, strain occurs in a crystalline lattice and an energy state of a conduction band or a valence band is changed. Thereby, the number of carriers or mobility in the band is changed so that macroscopically electrical conductivity or resistivity is changed. The property may be used as a detection principle of a physical sensor such as a strain sensor or a pressure sensor.

The present invention may use a p-type semiconductor of a hydrogen-terminated diamond surface as a resistive body causing a piezoresistive effect, measure change in resistivity of a p-type conductive layer when stress or strain is applied, and thus use the piezoresistive body as a strain detection device.

When the piezoresistive body is formed by using the doped diamond film of the related art, it is necessary to form a doped diamond (conductive diamond) film into which impurities such as boron (B) are introduced on a substrate on which an undoped diamond (insulating diamond) film is formed and then to pattern the doped diamond film in a resistive body shape, and thus it is necessary to form both the undoped diamond film and the doped diamond film on the same substrate.

Meanwhile, in a piezoresistive body of the present invention, since the undoped diamond film is formed and then the p-type conductivity of the diamond surface is expressed by a hydrogen plasma treatment within the same CVD chamber, it is possible to simplify a process of creating the piezoresistive body without the need for a toxic gas such as diborane (B₂H₆) as a doping gas.

Further, in the piezoresistive body using the doped diamond film of the related art, when boron (B) is used as an impurity, an acceptor level is formed at a relatively deep position of 0.37 eV above a valence band with respect to a band gap of 5.5 eV from a top of the valence band of a diamond to a bottom of a conduction band thereof. Meanwhile, according to the piezoresistive body using the p-type conductive layer of the hydrogen-terminated diamond surface of the present invention, since an acceptor level is formed at a shallow position of below 0.05 eV above a valence band, a ratio of an acceptor thermally excited in a room temperature is large. Thus, in the piezoresistive body using the doped diamond film, the ratio of the acceptor thermally excited at a high temperature is significantly increased and thus temperature dependence is increased. However, in the piezoresistive body using the hydrogen-terminated diamond film, it is possible to reduce the temperature dependence and form a pressure sensor and the like suitable for use in high temperature environments.

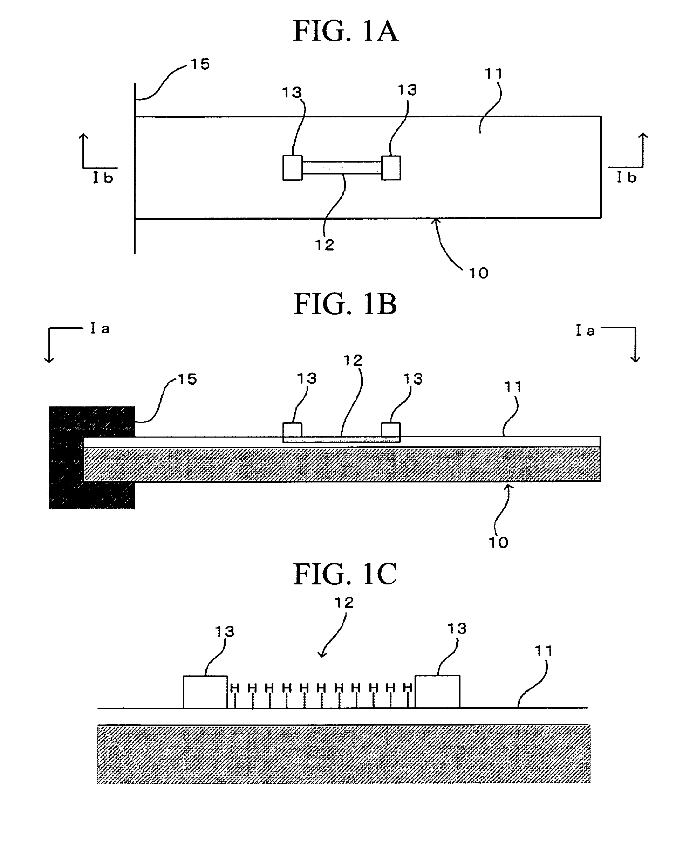

FIGS. 1A to 1C are views illustrating a configuration example of a strain gauge using a piezoresistive body. FIG. 1 is a plan view. FIG. 1B is a cross-sectional view taken along line Ib-Ib of FIG. 1A. FIG. 1C is a partially enlarged view of FIG. 1B.

As shown in FIGS. 1A to 1C, a strain gauge is configured using a silicon substrate 10 of which a diamond film 11 is formed on a surface and a straight line-shaped piezoresistive body 12 is formed on the silicon substrate 10. Electrodes 13 are formed in both ends of the piezoresistive body 12 and a resistance value of the piezoresistive body 12 is measured based on a voltage value between the electrodes 13 and the like. The piezoresistive body 12 corresponds to the piezoresistive body of the present invention.

As shown in FIGS. 1A to 1C, one end side of the silicon substrate 10 (a left end side in FIG. 1A) is supported by a supporting unit 15 to configure a strain gauge of a cantilever structure. When force is applied to the other end side (a right end side in FIG. 1A) and the silicon substrate 10 is bent in a thickness direction, tensile stress or compressive stress is applied to the piezoresistive body 12 and a change in resistance value depending on the stress occurs in the piezoresistive body 12. The resistance value is measured and an amount of change in resistance value before and after the stress is applied is calculated so that an amount of strain can be calculated. Further, the stress applied to the strain gauge and the force required to bend the cantilever are calculated from a mechanical property value or dimension value of the cantilever. Therefore, it is possible to measure the force applied to the cantilever from the change in resistance value of the piezoresistive body 12.

As a procedure of forming the strain gauge shown in FIGS. 1A to 1C, the diamond film 11 is formed on the silicon substrate 10 using a microwave plasma CVD apparatus and a hydrogen-termination treatment is performed on a diamond surface with hydrogen plasma. Next, a strain gauge including the piezoresistive body 12, the electrodes 13, and the like can be formed through patterning of a hydrogen-termination unit corresponding to the piezoresistive body 12 and photolithography of a wiring. In addition, FIG. 1C schematically shows a state of the hydrogen-terminated diamond surface in a region of the piezoresistive body 12.

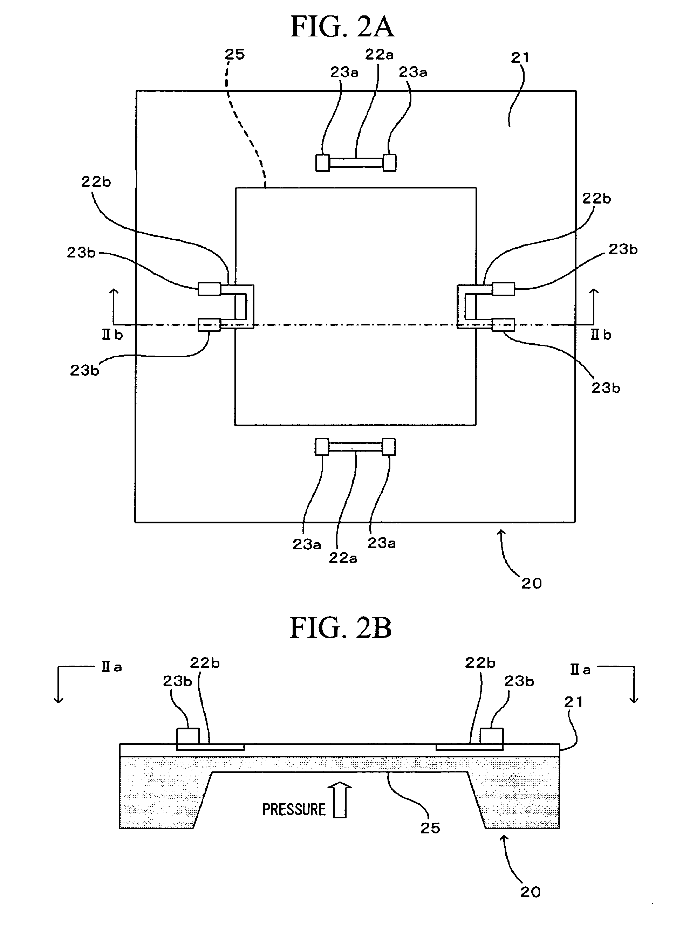

FIGS. 2A and 2B are views illustrating a configuration example of a pressure sensor in accordance with the first preferred embodiment of the present invention. FIG. 2A is a plan view. FIG. 2B is a cross-sectional view taken along line IIb-IIb of FIG. 2A. The pressure sensor uses a principle of a strain gauge using a piezoresistive body.

As shown in FIGS. 2A and 2B, the pressure sensor is configured using a silicon substrate 20 of which a diamond film 21 is formed on a surface and straight line-shaped piezoresistive bodies 22a and C-shaped piezoresistive bodies 22b are formed on the silicon substrate 20. Electrodes 23a are formed in both ends of each piezoresistive body 22a and electrodes 23b are formed in both ends of each piezoresistive body 22b. A resistance value of the piezoresistive body 22a is measured based on a voltage value between the electrodes 23a and a resistance value of the piezoresistive body 22b is measured based on a voltage value between the electrodes 23b. The piezoresistive body 22a and the piezoresistive body 22b correspond to the piezoresistive body of the present invention.

A central portion of the silicon substrate is formed to be thinner than a remaining area thereof, thereby serving as a diaphragm 25. The piezoresistive bodies 22b are formed in end portions of the diaphragm 25 and the piezoresistive bodies 22a are formed in a peripheral portion of the silicon substrate 20 not corresponding to the diaphragm 25.

The piezoresistive bodies 22a and the piezoresistive bodies 22b constitute a bridge circuit. When pressure is applied to the diaphragm 25 and the diaphragm is bent in a thickness direction of the silicon substrate 20, tensile stress or compressive stress is applied to the piezoresistive bodies 22b and a change in resistance value depending on stress occurs in the piezoresistive bodies 22b. The change in resistance value is output as a current value or a voltage value by the bridge circuit and an amount of the change in resistance value before and after the stress is applied to the diaphragm 25 is calculated. Therefore, an amount of strain in the end portions of the diaphragm 25 may be calculated. Further, the stress applied to the diaphragm 25 and the pressure required to bend the diaphragm 25 are calculated from a mechanical property value or a dimension value of the diaphragm 25. Therefore, it is possible to measure the pressure applied to the diaphragm 25 from a change in output of the bridge circuit.

As a procedure of forming the pressure sensor shown in FIGS. 2A and 2B, the diamond film 21 is formed on the silicon substrate 20 using a microwave plasma CVD apparatus and a hydrogen-termination treatment is performed on a diamond surface with hydrogen plasma. Next, the pressure sensor including the piezoresistive bodies 22a, the piezoresistive bodies 22b, and the electrodes 23a and 23b is formed through patterning of a hydrogen-termination unit corresponding to the piezoresistive bodies 22a and the piezoresistive bodies 22b and photolithography of a wiring.

The diaphragm 25 may be formed before or after forming the diamond piezoresistive bodies. In addition, various shapes of diaphragms 25 such as a rectangular diaphragm formed by anisotropic etching or a circular or elliptical diaphragm formed by isotropic etching are applied.

The arrangement of the piezoresistive bodies is not limited to the example of FIGS. 2A and 2B. For example, two hydrogen-terminated diamond piezoresistive bodies may be formed in a central portion of the diaphragm and two hydrogen-terminated diamond piezoresistive bodies may be formed in the end portions of the diaphragm. In this case, since stresses (compressive stress or tensile stress) applied to the piezoresistive bodies of the central portion and end portion of the diaphragm are reversed, it is possible to increase an output value through output synthesis by a bridge circuit of four piezoresistive bodies. Alternatively, a single hydrogen-terminated diamond piezoresistive body may be formed in the end portion or central portion of the diaphragm and the amount of strain in a measurement point may be measured from a change in resistance value of the piezoresistive body.

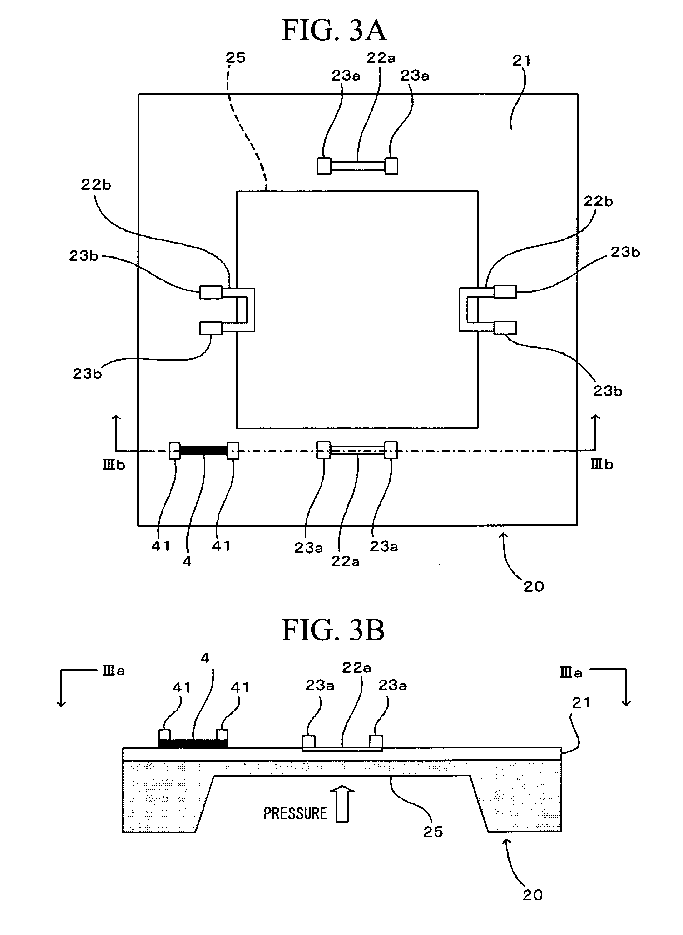

FIGS. 3A and 3B are views illustrating an example in which a diamond thermistor is added as a temperature sensor to the pressure sensor shown in FIGS. 2A and 2B. FIG. 3A is a plan view and FIG. 3B is a cross-sectional view taken along line IIIb-IIIb of FIG. 3A. In FIGS. 3A and 3B, the same elements as those in FIGS. 2A and 2B are denoted with the same reference numerals.

As shown in FIGS. 3A and 3B, a straight line-shaped thermistor 4 is formed on a surface of a diamond film 21 and both ends of the thermistor 4 are connected to electrodes 41. A temperature of a silicon substrate 20, that is, a temperatures of a fluid and the like in contact with the diaphragm 25, may be measured by detecting a resistance value of the thermistor 4 based on a voltage between the electrodes 41, and the like. The thermistor 4 is formed in a peripheral portion of the silicon substrate 20 not corresponding to the diaphragm 25 and thus strain due to bending of the diaphragm 25 is not caused and accurate recognition of the temperature is always possible. The resistance value of the thermistor 4 may be used in measuring the temperature of the fluid and the like in contact with the diaphragm 25 as well as in compensating temperature drift of the resistance values of the piezoresistive bodies 22a and the piezoresistive bodies 22b. By the latter, accurate pressure measurement is possible in a wide temperature range.

A procedure of forming the pressure sensor shown in FIGS. 3A and 3B will be described. First, the diamond film 21, which is an undoped diamond film, and a doped diamond film constituting the thermistor 4 are sequentially formed on the silicon substrate 20 using a microwave plasma CVD apparatus. For example, a diamond film doped with boron (B) may be used as the doped diamond film constituting the thermistor 4. Next, the doped diamond film is patterned so that the doped diamond film is removed by o₂-reactive ion etching (RIE) and the like from regions other than a formation region of the thermistor 4 and the diamond film 21, which is an undoped diamond film, is exposed. Subsequently, a hydrogen-termination treatment is performed on a surface of the diamond film 21 with hydrogen plasma, and piezoresistive bodies, electrodes, and the thermistor 4 are formed on the diamond film 21 through patterning of a hydrogen-termination unit corresponding to the piezoresistive bodies 22a and the piezoresistive bodies 22b and photolithography of a wiring. Therefore, the pressure sensor shown in FIGS. 3A and 3B may be formed.

A method of forming the diamond thermistor is not limited thereto. For example, an undoped diamond film is formed on a silicon substrate using a microwave plasma CVD apparatus and a region other than the forming portion of the diamond thermistor is covered with chromium (Cr) or titanium (Ti), and a doped diamond film is formed. Then, the chromium (Cr) or titanium (Ti) may be etched and the doped diamond film may be patterned by lift-off.

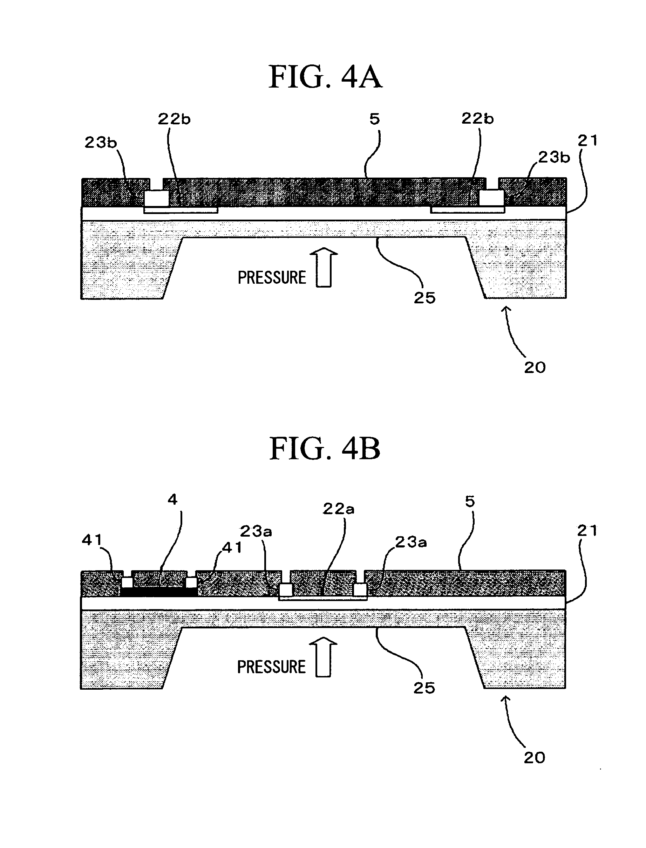

FIG. 4A is a cross-sectional view illustrating an example in which the pressure sensor shown in FIGS. 2A and 2B is provided with a protection layer. In FIG. 4A, the same elements as those of FIGS. 2A and 2B are denoted with the same reference numerals.

In an example of FIG. 4A, a protection layer 5 is entirely formed on a surface of a diamond film 21. The protection layer 5 may protect a hydrogen-terminated structure of a surface of the diamond film 21 from oxidation due to a high temperature, or the like. In addition, degradation of the hydrogen-terminated surface over time, an effect on a change in hole concentration by adsorption of NO₂ gas, or the like may be reduced by the protection layer 5 so that a stable operation of the pressure sensor can be secured.

A material of the protection layer 5 is not limited and an insulating material which does not cause a chemical reaction with the surface of the diamond film 21 when forming the protection layer 5 is used as the protection layer 5. For example, diamond-like carbon (DLC), sputtered carbon, electron cyclotron resonance (ECR)-sputtered carbon, silicon nitride (Si₃N₄), aluminum nitride (AlN), calcium fluoride (CaF₂), Teflon (registered trademark), silicon carbide (SiC), silicon oxide (SiO₂), titanium oxide (TiO₂), aluminum oxide (Al₂O₃), zirconium oxide (ZrO₂), zinc oxide (ZnO), or the like is used as the protection layer 5.

FIG. 4B is a cross-sectional view illustrating an example in which the pressure sensor shown in FIGS. 3A and 3B is provided with a protection layer. In FIG. 4B, the same elements as those of FIGS. 3A and 3B are denoted with the same reference numerals.

In an example of FIG. 4B, a protection layer 5 is entirely formed on a surface of a diamond film 21. The protection layer 5 may protect a hydrogen-terminated structure of a surface of the diamond film 21 from oxidation due to a high temperature or the like. In addition, degradation of the hydrogen-terminated surface over time, an effect on a change in hole concentration by adsorption of NO₂ gas or the like may be reduced by the protection layer 5 so that a stable operation of the pressure sensor can be secured. The protection layer 5 does not affect the function of the thermistor 4.

A material of the protection layer 5 is not limited and an insulating material which does not cause a chemical reaction with the surface of the diamond film 21 when forming the protection layer 5 is used as the protection layer 5. For example, diamond-like carbon (DLC), sputtered carbon, ECR-sputtered carbon, silicon nitride (Si₃N₄), aluminum nitride (AlN), calcium fluoride (CaF₂), Teflon (registered trademark), silicon carbide (SiC), silicon oxide (SiO₂), titanium oxide (TiO₂), aluminum oxide (Al₂O₃), zirconium oxide (ZrO₂), zinc oxide (ZnO), or the like is used as the protection layer 5.

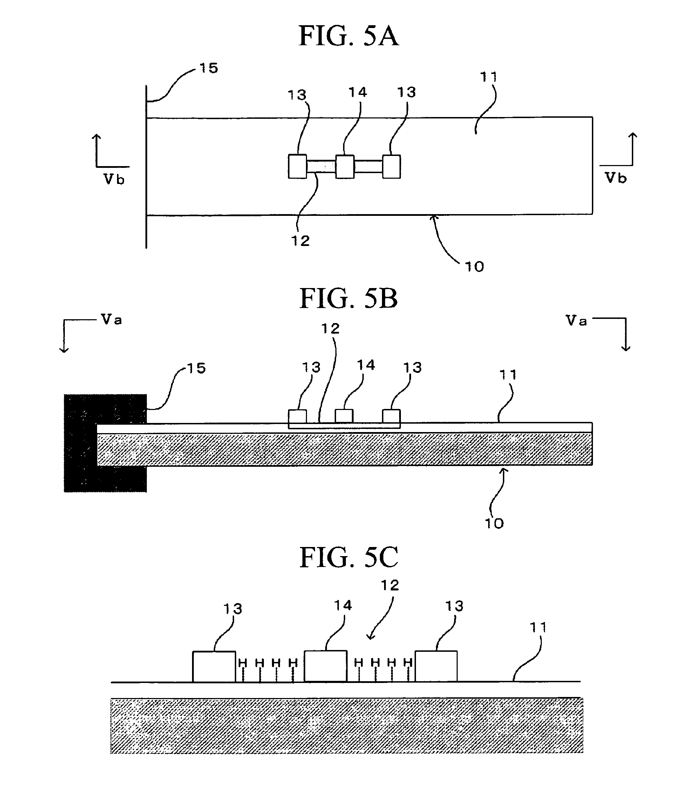

FIGS. 5A to 5C are views illustrating a configuration example of a strain gauge using a piezoresistive body. FIG. 5A is a plan view. FIG. 5B is a cross-sectional view taken along line Vb-Vb of FIG. 5A. FIG. 5C is a partially enlarged cross-sectional view of FIG. 5B. A gauge of FIGS. 5A to 5C constitutes a FET in which a hydrogen-terminated p-type semiconductor property is used by adding a gate electrode to the piezoresistive body of the strain gauge shown in FIGS. 1A to 1C. In FIGS. 5A to 5C, the same elements as those in FIGS. 1A to 1C are denoted with the same reference numerals.

As shown in FIGS. 5A to 5C, the strain gauge is configured using a silicon substrate 10 of which a diamond film 11 is formed on a surface and a straight line-shaped piezoresistive body 12 is formed on the silicon substrate 10. Electrodes 13 are formed in both ends of the piezoresistive body 12 and a resistance value of the piezoresistive body 12 is measured based on a voltage value between the electrodes 13 and the like. In addition, an electrode 14 serving as a gate electrode is formed in a central portion of the piezoresistive body 12 so that the FET having the electrodes 13 serving as a source and a drain is constituted.

As shown in FIGS. 5A to 5C, one end side (a left side of FIG. 5A) of the silicon substrate 10 is supported by a supporting unit 15 and thus the strain gauge having a cantilever structure is constituted. When force is applied to the other side (a right side of FIG. 5A) and the silicon substrate 10 is bent in a thickness direction, tensile stress or compressive stress is applied to the piezoresistive body 12 and a change in resistance value depending on stress occurs in the piezoresistive body 12. The resistance value may be measured, an amount of change in resistance value before and after the stress is applied may be calculated, and thus an amount of strain may be calculated. Further, the stress applied to the strain gauge and force required to bend the cantilever are calculated from a mechanical property value and a dimension value of the cantilever. Therefore, it is possible to measure the force applied to the cantilever from the change in resistance value of the piezoresistive body 12.

In addition, in the strain gauge shown in FIGS. 5A to 5C, the FET using a p-type conductive layer of a hydrogen-terminated diamond surface as a resistive body causing a piezoresistive effect is formed. The resistive body 12 is used as a strain detection device by using a hole channel between the source and drain in which an amount of holes is controlled by a gate voltage of the gate electrode 14 and measuring a change in resistivity of the hole channel when stress or strain is applied. The control of the amount of holes from the gate voltage may be used for adjustment of strain detection sensitivity or adjustment of temperature dependence.

As a procedure of forming the strain gauge shown in FIGS. 5A to 5C, the diamond film 11 is formed on the silicon substrate 10 using a microwave plasma CVD apparatus and a hydrogen-termination treatment is performed on a diamond surface with hydrogen plasma. Next, the strain gauge including the piezoresistive body 12, the electrodes 13 and 14, and the like may be formed through patterning of a hydrogen-termination unit corresponding to the piezoresistive body 12 and photolithography of a wiring. FIG. 5C schematically shows a state of the hydrogen-terminated diamond surface in a region of the piezoresistive body 12.

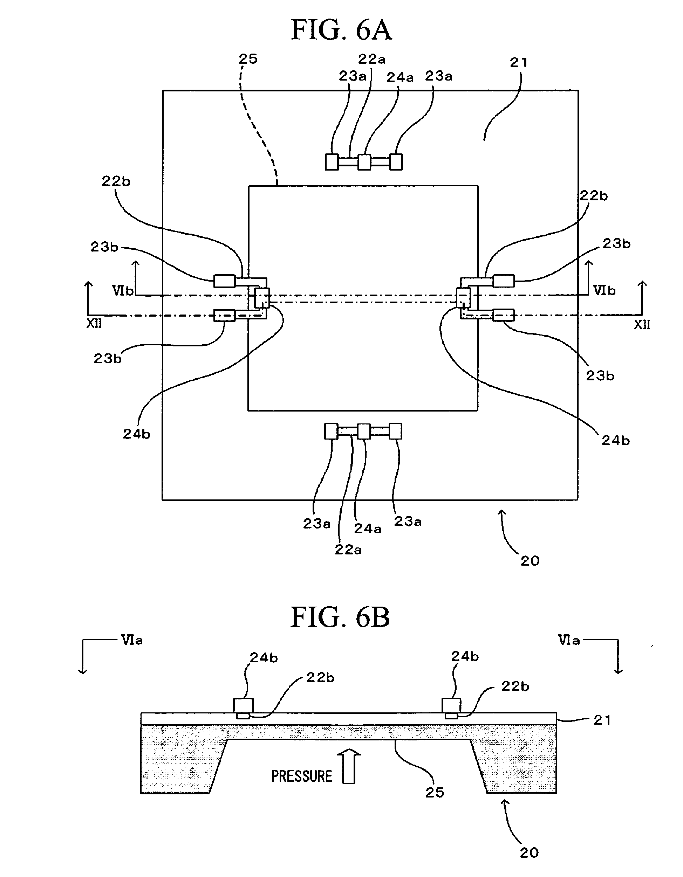

FIGS. 6A and 6B are views illustrating a configuration of a pressure sensor using a piezoresistive body. FIG. 6A is a plan view and FIG. 6B is a cross-sectional view taken along line VIb-VIb of FIG. 6A.

As shown in FIGS. 6A and 6B, the pressure sensor is configured using a silicon substrate 20 of which a diamond film 21 is formed on a surface and straight line-shaped piezoresistive bodies 22a and C-shaped piezoresistive bodies 22b are formed on the silicon substrate 20. Electrodes 23a serving as a source electrode and a drain electrode are formed in both ends of each piezoresistive body 22a and an electrode 24a serving as a gate electrode is formed in a central portion of each piezoresistive body 22a so that a FET using a p-type conductive layer of a hydrogen-terminated diamond surface is constituted. In addition, electrodes 23b serving as a source electrode and a drain electrode are formed in both ends of each of the piezoresistive bodies 22b and an electrode 24b serving as a gate electrode is formed in a central portion of each of the piezoresistive bodies 22b. Therefore, a FET using a p-type conductive layer of a hydrogen-terminated diamond surface is constituted. The resistance value of each piezoresistive body 22a is measured based on a voltage value between the electrodes 23a and the like and a resistive value of each piezoresistive body 22b is measured based on a voltage value between the electrodes 23b. The amount of holes of the p-type conductive layer of the hydrogen-terminated diamond surface is controlled by each of the gate electrodes of the FETs and may be used for adjustment of strain detection sensitivity or adjustment of temperature dependence. Specifically, the temperature dependence of the resistance value of the piezoresistive body may be canceled by changing a gate voltage according to a temperature. Alternatively, the voltage value of the gate voltage may be maintained at a voltage value which suppresses the temperature dependence of the resistance value of the piezoresistive body.

A central portion of the silicon substrate 20 is formed to be thinner than a remaining region thereof, thereby serving as a diaphragm 25. The piezoresistive bodies 22b are formed in end portions of the diaphragm 25 and the piezoresistive bodies 22a are formed in a peripheral portion of the silicon substrate 20 not corresponding to the diaphragm 25.

The piezoresistive bodies 22a and the piezoresistive bodies 22b constitute a bridge circuit. When pressure is applied to the diaphragm 25 and the diaphragm is bent in a thickness direction of the silicon substrate 20, tensile stress or compressive stress is applied to the piezoresistive bodies 22b and a change in resistance value depending on stress occurs in the piezoresistive bodies 22b. The change in resistance value is output as a current value or a voltage value by the bridge circuit and an amount of the change in resistance value before and after the stress is applied to the diaphragm 25 is calculated. Therefore, an amount of strain in the end portions of the diaphragm 25 may be calculated. Further, the stress applied to the diaphragm 25 and pressure required to bend the diaphragm 25 are calculated from a mechanical property value of the diaphragm 25. Therefore, it is possible to measure the pressure applied to the diaphragm 25 from a change in output of the bridge circuit.

As a procedure of forming the pressure sensor shown in FIGS. 6A and 6B, the diamond film 21 is formed on the silicon substrate 20 using a microwave plasma CVD apparatus and a hydrogen-termination treatment is performed on a diamond surface with hydrogen plasma. Next, the pressure sensor including the piezoresistive bodies 22a, the piezoresistive bodies 22b, and the electrodes 23a, 24a, 23b and 24b may be formed through patterning of a hydrogen-termination unit corresponding to the piezoresistive bodies 22a and the piezoresistive bodies 22b and photolithography of a wiring.

An arrangement of the piezoresistive bodies is not limited to the example of FIGS. 6A and 6B. For example, two hydrogen-terminated diamond piezoresistive bodies may be formed in the central portion of the diaphragm and two hydrogen-terminated diamond piezoresistive bodies may be formed in the end portions of the diaphragm. In this case, since stresses (compressive stress or tensile stress) applied to the piezoresistive bodies of the central portion and end portion of the diaphragm are reversed, an output value may be increased through output synthesis by a bridge circuit of four piezoresistive bodies. Alternatively, a single hydrogen-terminated diamond piezoresistive body may be formed in the end portion or central portion of the diaphragm and an amount of strain in a measurement point may be measured from a change in resistance value of the piezoresistive body.

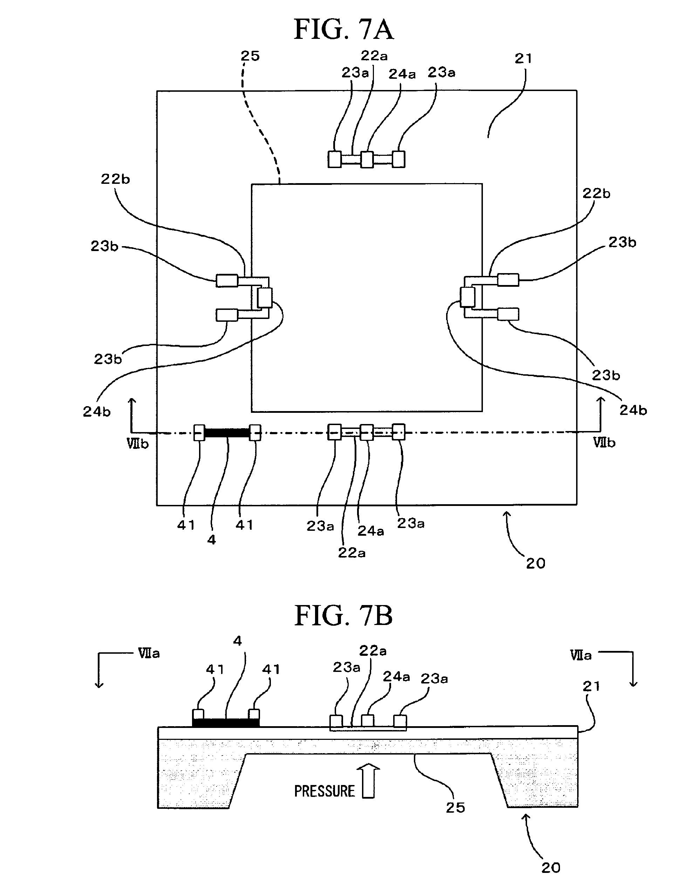

FIGS. 7A and 7B are views illustrating an example in which a diamond thermistor is added as a temperature sensor to the pressure sensor shown in FIGS. 6A and 6B. FIG. 7A is a plan view and FIG. 7B is a cross-sectional view taken along line VIIb-VIIb of FIG. 7A. In FIGS. 7A and 7B, the same elements as those in FIGS. 6A and 6B are denoted with the same reference numerals.

As shown in FIGS. 7A and 7B, a straight line-shaped thermistor 4 is formed on a surface of a diamond film 21 and both ends of the thermistor 4 are connected to electrodes 41. The temperature of a silicon substrate 20, that is, the temperatures of a fluid and the like in contact with the diaphragm 25, may be measured by detecting a resistance value of the thermistor 4 based on a voltage between the electrodes 41 and the like. The thermistor 4 is formed in a peripheral portion of the silicon substrate 20 not corresponding to the diaphragm 25 and thus strain due to bending of the diaphragm 25 is not caused and accurate recognition of the temperature is always possible. A resistance value of the thermistor 4 may be used in measuring the temperature of the fluid and the like in contact with the diaphragm 25 as well as in compensating for temperature drift of resistance values of the piezoresistive bodies 22a and the piezoresistive bodies 22b. By the latter, accurate pressure measurement is possible in a wide temperature range.

As a procedure of forming the pressure sensor shown in FIGS. 7A and 7B, the diamond film 21, which is an undoped diamond film, and a doped diamond film constituting the thermistor 4 are sequentially formed on the silicon substrate 20 using a microwave plasma CVD apparatus. Next, the doped diamond film is patterned to be removed from a region other than that of the thermistor 4 and to expose a surface of the diamond film 21 in the region. Subsequently, a hydrogen-termination treatment is performed on a diamond surface with hydrogen plasma. The pressure sensor shown in FIGS. 7A and 7B can be formed through patterning of a hydrogen-termination unit corresponding to the piezoresistive bodies 22a and the piezoresistive bodies 22b and photolithography of a wiring.

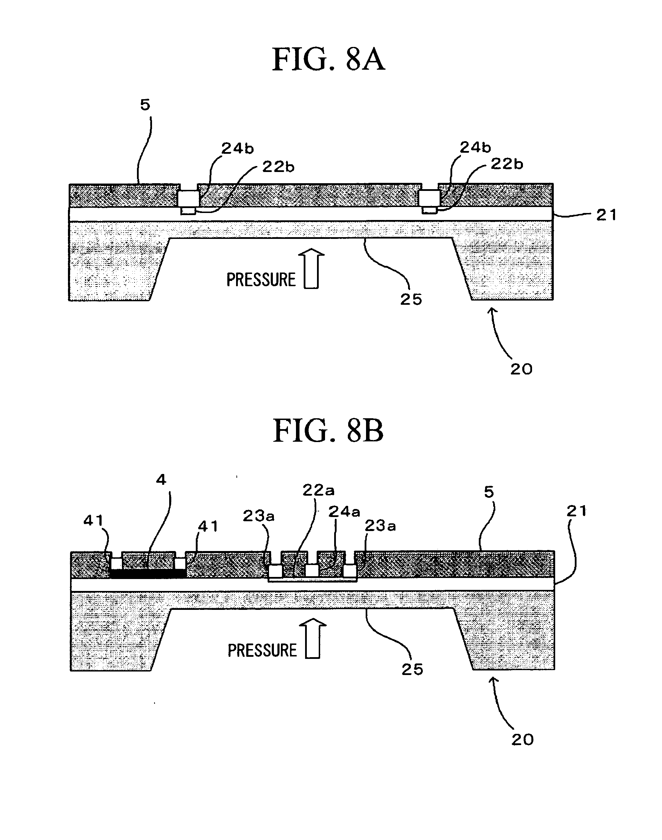

FIG. 8A is a cross-sectional view illustrating an example in which the pressure sensor shown in FIGS. 6A and 6B is provided with a protection layer. In FIG. 8A, the same elements as those in FIGS. 6A and 6B are denoted with the same reference numerals.

In an example of FIG. 8A, a protection layer 5 is entirely formed on a surface of a diamond film 21. The protection layer 5 may protect a hydrogen-terminated structure of a surface of the diamond film 21 from oxidation due to a high temperature or the like. In addition, degradation of the hydrogen-terminated surface over time, an effect on a change in hole concentration by adsorption of NO₂ gas, or the like may be reduced so that a stable operation of the pressure sensor can be secured.

A material of the protection layer 5 is not limited and an insulating material which does not cause a chemical reaction with the surface of the diamond film 21 when forming the protection layer 5 may be used as the protection layer 5. For example, diamond-like carbon (DLC), sputtered carbon, ECR-sputtered carbon, silicon nitride (Si₃N₄), aluminum nitride (A1N), calcium fluoride (CaF₂), Teflon (registered trademark), silicon carbide (SiC), silicon oxide (SiO₂), titanium oxide (TiO₂), aluminum oxide (Al₂O₃), zirconium oxide (ZrO₂), zinc oxide (ZnO), or the like may be used as the protection layer 5.

FIG. 8B is a cross-sectional view illustrating an example in which the pressure sensor shown in FIGS. 7A and 7B is provided with a protection layer. In FIG. 8B, the same elements as those of FIGS. 7A and 7B are denoted with the same reference numerals.

In an example of FIG. 8B, a protection layer 5 is entirely formed on a surface of a diamond film 21. The protection layer 5 may protect a hydrogen-terminated structure of a surface of the diamond film 21 from oxidation due to a high temperature or the like. In addition, degradation of the hydrogen-terminated surface over time, an effect on a change in hole concentration by adsorption of NO₂ gas, or the like may be reduced by the protection layer 5 so that a stable operation of the pressure sensor can be secured. The protection layer 5 does not affect the function of a thermistor.

A material of the protection layer 5 is not limited and an insulating material which does not cause a chemical reaction with the surface of the diamond film 21 when forming the protection layer 5 may be used as the protection layer 5. For example, diamond-like carbon (DLC), sputtered carbon, ECR-sputtered carbon, silicon nitride (Si₃N₄), aluminum nitride (AlN), calcium fluoride (CaF₂), Teflon (registered trademark), silicon carbide (SiC), silicon oxide (SiO₂), titanium oxide (TiO₂), aluminum oxide (Al₂O₃), zirconium oxide (ZrO₂), zinc oxide (ZnO), or the like may be used as the protection layer 5.

As described above, by using the p-type conductive layer of the hydrogen-terminated diamond surface as the piezoresistive body, the temperature dependence may be suppressed and a forming process may be simplified, as compared with a diamond pressure sensor using a doped diamond film into which impurities such as boron (B) are introduced as a piezoresistive body. A strain gauge or a pressure sensor with high sensitivity adoptable under a high temperature environment may be obtained.

In addition, it is possible to detect a temperature or to correct a temperature of a pressure measurement value by forming a doped diamond thermistor doped with boron (B) or the like on the same substrate. Further, degradation of the hydrogen-terminated surface over time, an effect on a change in hole concentration by adsorption of NO₂ gas, or the like may be suppressed by the protection layer and thus a stable operation of the pressure sensor may be secured.

In the strain gauge and pressure sensor, although the hydrogen plasma treatment has been performed after forming the diamond film, the hydrogen plasma treatment may be performed after patterning a metal electrode for a wiring and then the hydrogen-terminated diamond resistive body may be patterned.

In addition, the method of synthesizing the diamond film on the substrate is not limited and a heat filament CVD method, a microwave plasma CVD method, a high-temperature high-pressure synthesis method, a plasma arc jet method, a physical vapor deposition, or the like is used.

As a dopant for imparting conductivity to the diamond film, boron (B), nitrogen (N), phosphorus (P), nickel (Ni), or the like is used.

A diamond film quality is not limited and single crystalline (Ia, Ib, IIa, IIb), nano polycrystalline, micropolycrystalline, a sintered body, or the like is used.

Although a material of the substrate is not limited, a substrate having a coefficient of thermal expansion close to a coefficient of thermal expansion of diamond is suitable for use at a high temperature. For example, silicon (Si), silicon carbide (SiC), a nickel-iron (Ni-Fe) alloy, tungsten (W), titanium (Ti), molybdenum (Mo), niobium (Nb), graphite, glassy carbon, amorphous carbon, or the like is used.

In the present invention, the diamond surface is hydrogen-terminated and has a p-type semiconductor property. The diamond surface is not limited to an entirely hydrogen-terminated diamond surface and may be a partially hydrogen-terminated diamond surface. In order to avoid degradation over time or adsorption of NO₂ gas, the surface may be modified with an element such as oxygen (O), nitrogen (N), sulfur (S), chlorine (Cl), iodine (I), or bromine (Br), an organic molecule such as an alkyl group, or a benzene ring, or the like.

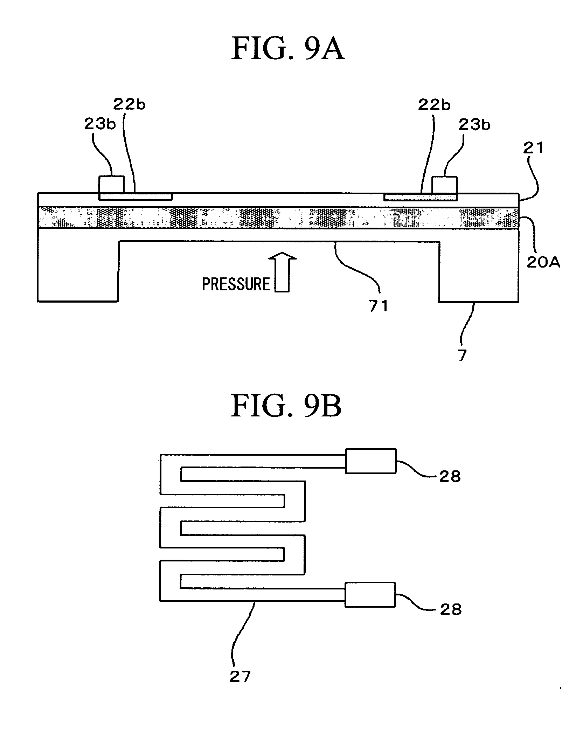

The diaphragm used in the pressure sensor of the present invention may be configured using a metal member. FIGS. 9A and 9B are views illustrating other preferred embodiments. FIG. 9A is a cross-sectional view illustrating a configuration example of a diaphragm. FIG. 9B is a view illustrating another shape of a piezoresistive body. In an example of FIG. 9A, a diaphragm is configured of a metal member 7 and a silicon substrate 20A bonded to each other in place of the diaphragm of the pressure sensor shown in FIGS. 2A and 2B. The same diaphragm may be used in place of the diaphragm of the pressure sensor shown in FIGS. 4A and 4B. As shown in FIG. 9A, the metal member 7 is thinly formed in a region of a diaphragm 71 and the metal member 7 and the silicon substrate 20A are deformed under pressure. A material of the metal member 7 may be arbitrarily selected according to use of the pressure sensor. For example, it is possible for the metal member 7 to provide corrosion resistance unattainable in silicon to the diaphragm.

An arbitrary shape may be applied as a shape of the piezoresistive body used in the pressure sensor of the present invention. FIG. 9B shows a repeated curve-shaped piezoresistive body 27. Electrodes 28 are connected to both ends of the piezoresistive body 27. In this way, an effective length of the piezoresistive body may be extended by forming the piezoresistive body in the repeatedly curved shape and detection sensitivity of strain or pressure may be enhanced. In the example of FIG. 9B, an effective length in a horizontal direction in FIG. 9B may be effectively extended.

Forming Process of Semiconductor Device having Piezoresistive Body.

Next, an example of a forming process of a semiconductor device having a piezoresistive body will be described in detail.

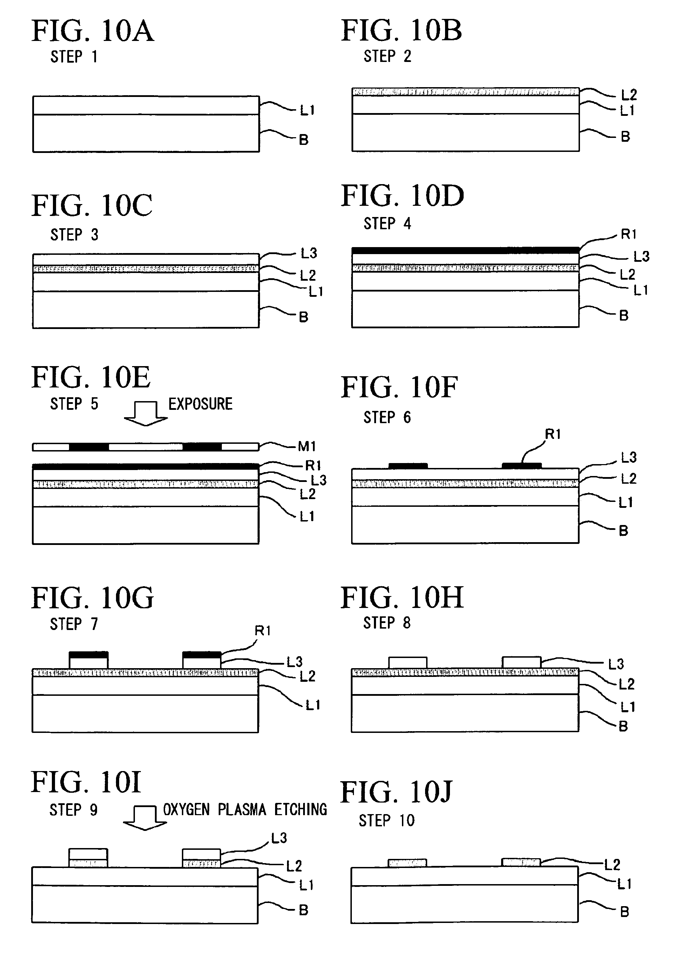

FIGS. 10A to 10T are views illustrating a forming process of a semiconductor device having a piezoresistive body and illustrate cross-sections of a product (corresponding to a cross-section of a portion shown in FIG. 2B) in each process (step 1 to step 20). Hereinafter, each step will be described with reference to FIGS. 10A to 10T.

In step 1, a polycrystalline diamond (PCD) substrate in which a polycrystalline diamond L1 is formed on a surface of a silicon substrate B is prepared (FIG. 10A).

In step 2, a hydrogen-terminated diamond layer L2 is formed on a surface of the PCD substrate by a hydrogen plasma treatment (FIG. 10B).

In step 3, aluminum (Al) sputtering is performed on a film surface of the hydrogen-terminated diamond layer L2 to form an A1 film L3 (FIG. 10C).

In step 4, a positive photoresist R1 is spin-coated on a surface of the Al film L3 and baked at a high temperature in a constant temperature oven to dry the photoresist R1 l and to enhance adhesion between the photoresist R1 and the A1 film L3 (FIG. 10D).

In step 5, a pattern is transferred onto the photoresist R1 by exposure using a photomask M1 in which the pattern is drawn (FIG. 10E).

In step 6, an exposed portion of the photoresist R1 is removed with a developing solution (FIG. 10F).

In step 7, the Al film L3 is etched using a pattern of the photoresist R1 remaining through a development as a mask (FIG. 10G).

In step 8, the photoresist R1 is removed using acetone (FIG. 10H).

In step 9, oxygen plasma etching is performed on a surface of the polycrystalline diamond L1, in which the hydrogen-terminated surface (hydrogen-terminated diamond layer L2) is formed, using the patterned Al film L3 as a mask to form an oxygen-terminated surface in regions other than a region in which the Al film L3 is formed (FIG. 10I).

In step 10, the Al film L3 is removed by an Al etching solution.

A piezoresistive body of the polycrystalline diamond, in which the hydrogen-terminated surface is formed, is formed through step 1 to step 10 (FIG. 10J).

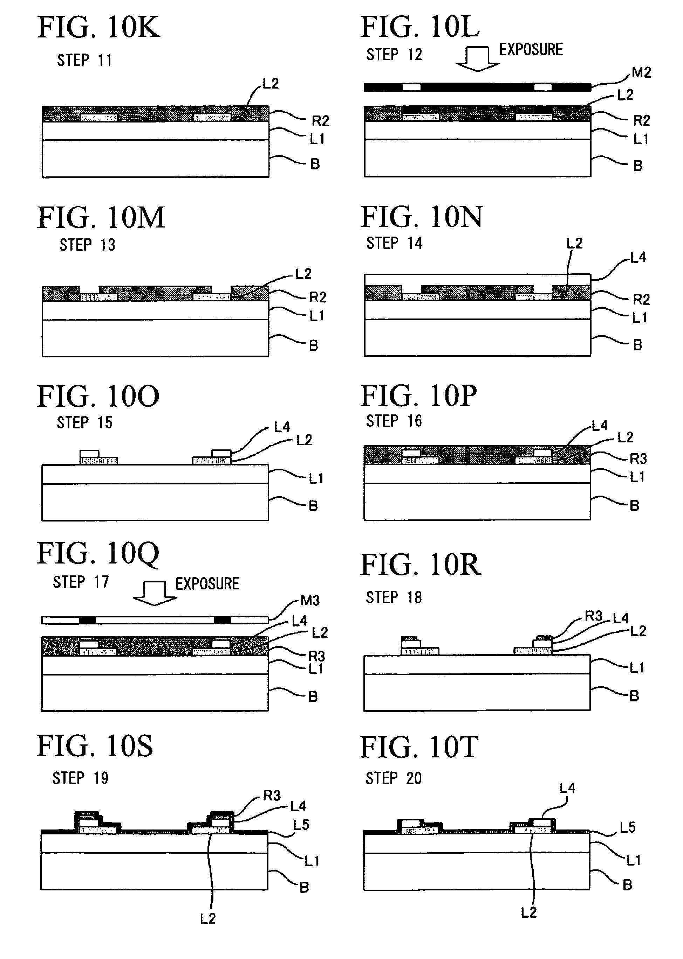

In step 11, a positive photoresist R2 is spin-coated on a surface in which the piezoresistive body of the polycrystalline diamond having the hydrogen-terminated surface is formed and baked in a constant temperature oven (FIG. 10K). Thereby, the photoresist R2 is dried and adhesion between the photoresist R2 and an underlying film is enhanced.

In step 12, a pattern is transferred onto the photoresist R2 by exposure using a mask M2 in which the pattern, which is different from that of the mask M1, is drawn (FIG. 10L).

In step 13, an exposed portion of the photoresist R2 is removed with a developing solution (FIG. 10M).

In step 14, titanium (Ti) sputtering and gold (Au) sputtering are performed on a surface of the developed photoresist R2 to form a Ti/Au layer L4 (FIG. 10N).

In step 15, the photoresist R2 and the Ti/Au layer L4 on the photoresist R2 are removed using lift-off to form a metal wiring formed of the Ti/Au layer L4 (FIG. 10O).

In step 16, a positive photoresist R3 is spin-coated on a surface in which the piezoresistive body and the metal wiring are formed and baked at a high temperature in a constant temperature oven (FIG. 10P). Thereby, the photoresist R3 is dried and adhesion between the photoresist R3 and an underlying film is enhanced.

In step 17, a pattern is transferred onto the photoresist R3 by exposure using the mask M3 in which a pattern, which is different from those of the mask M1 and the mask M2, is drawn (FIG. 10Q).

In step 18, an exposed portion of the photoresist R3 is removed with a developing solution (FIG. 10R).

In step 19, silicon nitride (Si₃N₄) sputtering is performed on a surface of the developed photoresist R3 to form a Si₃N₄ film L5 (FIG. 10S).

In step 20, the photoresist R3 and the Si₃N₄ film L5 on the photoresist R3 are removed using lift-off to form a protection layer for protecting the hydrogen-terminated surface of the diamond which is formed of the Si₃N₄ film L5. The metal wiring formed of the Ti/Au film L4 is partially exposed to form an electrical connection with the outside (FIG. 10T).

After step 20, the substrate B is etched to form a diaphragm, thereby obtaining a diamond pressure sensor. In addition, an accelerometer, a viscometer, and the like using the diamond piezoresistive body, in which the hydrogen-terminated surface is formed, may be formed by using the same method.

### Forming Process of Piezo FET

Next, an example of a forming process of a hydrogen-terminated diamond piezo FET will be described in detail.

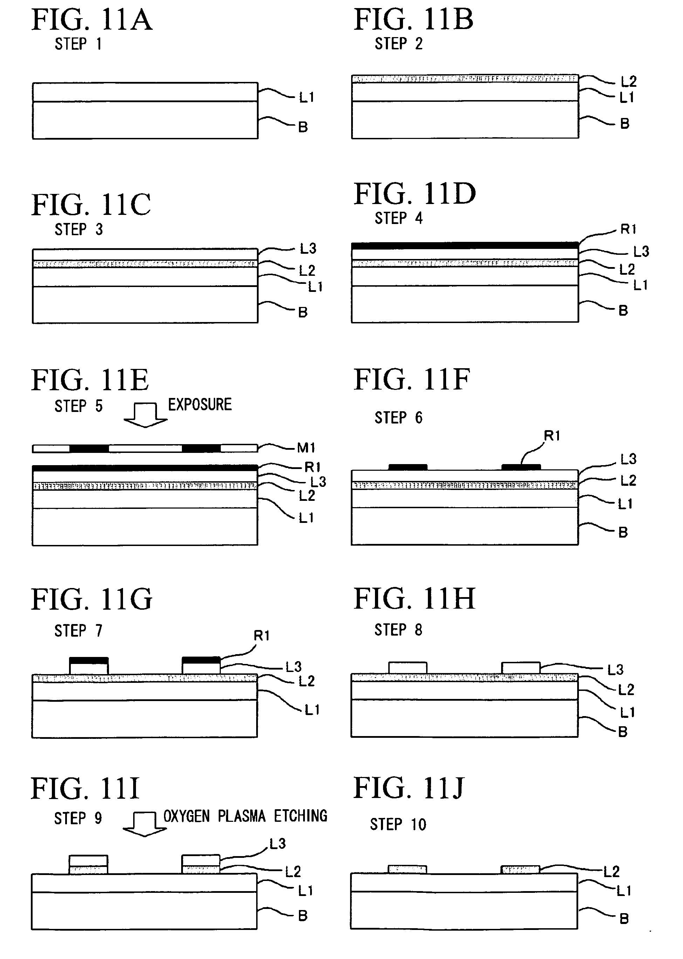

FIGS. 11A to 11Y are views illustrating a forming process of a hydrogen-terminated diamond piezo FET and illustrate cross-sections of a product (corresponding to a cross-section taken along line XII-XII of FIG. 6A) in each process (step 1 to step 25). Hereinafter, each step will be described with reference to FIGS. 11A to 11Y.

In step 1, a polycrystalline diamond (PCD) substrate in which a polycrystalline diamond L1 is formed on a surface of a silicon substrate B is prepared (FIG. 11A).

In step 2, a hydrogen-terminated diamond layer L2 is formed on a surface of the polycrystalline diamond substrate by a hydrogen-termination treatment (FIG. 11B).

In step 3, aluminum (Al) sputtering is performed on a film surface of the hydrogen-terminated diamond layer L2 to form an Al film L3 (FIG. 11C).

In step 4, a positive photoresist R 1 is spin-coated on a surface of the Al film L3 and baked at a high temperature in a constant temperature oven to dry the photoresist R1 and to enhance adhesion between the photoresist R1 and the A1 film L3 (FIG. 11D).

In step 5, a pattern is transferred onto the photoresist R1 by exposure using a photomask M1 in which the pattern is drawn (FIG. 11E).

In step 6, an exposed portion of the photoresist R1 is removed with a developing solution (FIG. 11F).

In step 7, the Al film L3 is etched using a pattern of the photoresist R1 remaining through a development as a mask (FIG. 11G).

In step 8, the photoresist R1 is removed using acetone (FIG. 11H).

In step 9, oxygen plasma etching is performed on a surface of the polycrystalline diamond L1, in which the hydrogen-terminated surface (hydrogen-terminated diamond layer L2) is formed, using the patterned Al film L3 as a mask to form an oxygen-terminated surface in regions other than a region in which the Al film L3 is formed (FIG. 11I).

In step 10, the Al film L3 is removed with an Al etching solution (FIG. 11J). A piezoresistive body of the polycrystalline diamond, in which the hydrogen-terminated surface is formed, is formed through step 1 to step 10. Thereafter, the piezo FET is formed by connecting electrodes to the piezoresistive body.

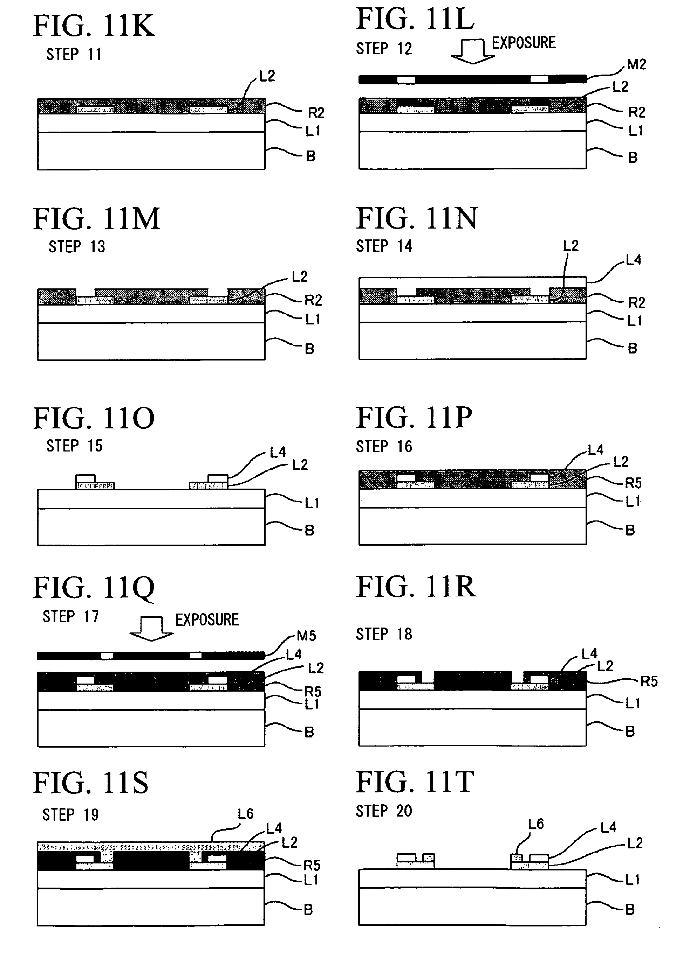

In step 11, a positive photoresist R2 is spin-coated on a surface in which the piezoresistive body of the polycrystalline diamond having the hydrogen-terminated surface is formed and baked at a high temperature in a constant temperature oven (FIG. 11K). Thereby, the photoresist R2 is dried and adhesion between the photoresist R2 and an underlying film is enhanced.

In step 12, a pattern is transferred onto the photoresist R2 by exposure using a mask M2 in which a pattern, which is different from that of the mask M1, is drawn (FIG. 11L).

In step 13, an exposed portion of the photoresist R2 is removed with a developing solution (FIG. 11M).

In step 14, titanium (Ti) sputtering and gold (Au) sputtering are performed on a surface of the developed photoresist R2 to form a Ti/Au layer L4 (FIG. 11N).

In step 15, the photoresist R2 and the Ti/Au layer L4 on the photoresist R2 are removed using lift-off to form a metal wiring formed of the Ti/Au layer L4 (FIG. 11 O).

In step 16, a positive photoresist R5 is spin-coated on a surface in which the piezoresistive body and the metal wiring are formed and baked at a high temperature in a constant temperature oven. Thereby, the photoresist R5 is dried and adhesion between the photoresist R5 and an underlying film is enhanced (FIG. 11P).

In step 17, a pattern is transferred onto the photoresist R5 by exposure using a mask M5 in which a pattern, which is different from those of the mask M1 and the mask M2, is drawn (FIG. 11Q).

In step 18, an exposed portion of the photoresist R5 is removed with a developing solution (FIG. 11R).

In step 19, aluminum (Al) sputtering is performed on a surface of the developed photoresist R5 to form an Al film L6 constituting a gate electrode (FIG. 11S).

In step 20, the photoresist R5 and the Al film L6 on the photoresist R5 are removed using lift-off to form the gate electrode formed of the Al film L6 on the piezoresistive body of the polycrystalline diamond in which the hydrogen-terminated surface is formed. The gate electrode formed of the Al film L6 is positioned on a hole channel of the piezo FET including the piezoresistive body (FIG. 11 T).

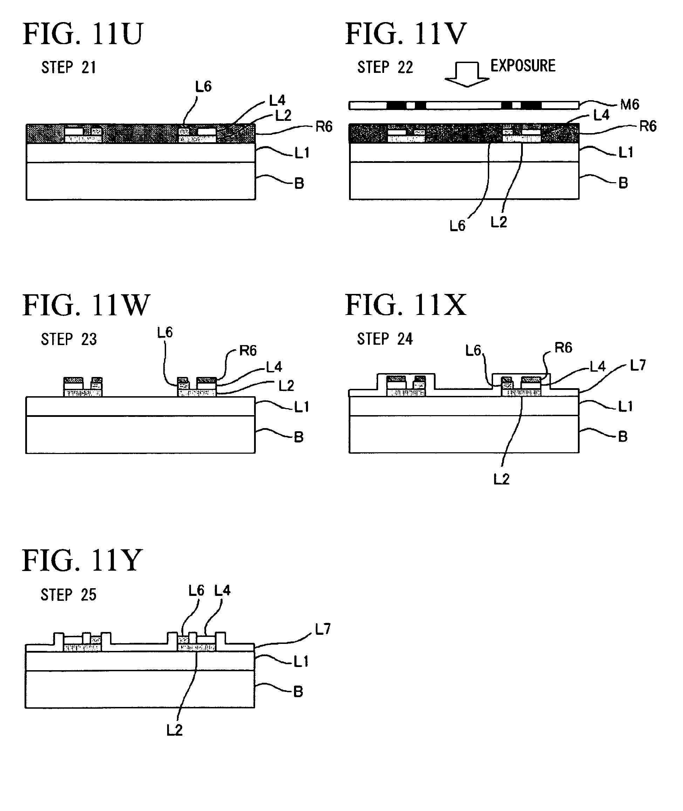

In step 21, a positive photoresist R6 is spin-coated on a surface in which the piezo FET of the polycrystalline diamond having the hydrogen-terminated surface, the metal wiring, and the gate electrode are formed and baked at a high temperature in a constant temperature oven (FIG. 11U). Thereby, the photoresist R6 is dried and adhesion between the photoresist R6 and an underlying film is enhanced.

In step 22, a pattern is transferred onto the photoresist R6 by exposure using a mask M6 in which a pattern, which is different from those of the mask M1, the mask M2, and the mask M5, is drawn (FIG. 11V).

In step 23, an exposed portion of the photoresist R6 is removed with a developing solution (FIG. 11W).

In step 24, silicon nitride (Si₃N₄) sputtering is performed on a surface of the developed photoresist R6 to form a Si₃N₄ film L7 (FIG. 11X).

In step 25, the photoresist R6 and the Si₃N₄ film L7 on the photoresist R6 are removed using lift-off to form a protection layer for protecting the hydrogen-terminated surface of the diamond which is formed of the Si₃N₄ film L7. The metal wiring formed of the Ti/Au film L4 and the gate electrode formed of the Al layer L6 are partially exposed to form an electrical connection with the outside (FIG. 11Y).

After step 25, the substrate B is etched to form a diaphragm, thereby obtaining a diamond pressure sensor. In addition, an accelerometer, a viscometer, and the like using the diamond piezoresistive body in which the hydrogen-terminated surface is formed may be formed by using the same method.

An application range of the present invention is not limited to the preferred embodiments. The present invention may be widely applied to a semiconductor device and the like having a piezoresistive body using change in a resistance value when external force is applied to a semiconductor material.

As used herein, the following directional terms "forward, rearward, above, downward, vertical, horizontal, below, transverse, row and column" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A semiconductor device comprising:
a piezoresistive body of which a resistance value is changed by action of an external force, wherein
the piezoresistive body includes a surface layer of diamond, and
the surface layer is hydrogen-terminated.

2. The semiconductor device according to claim 1, wherein
the diamond is insulating diamond, and
a portion of the surface layer is hydrogen-terminated.

3. A strain gauge comprising:
a silicon substrate of which a film of diamond is formed on a surface; and
a piezoresistive body formed on the silicon substrate to extend in a straight line shape, of which a resistance value is changed by action of an external force, wherein
the piezoresistive body includes a surface layer of the diamond, and
the surface layer is hydrogen-terminated.

4. The strain gauge according to claim 3, wherein
the diamond is insulating diamond, and
a portion of the surface layer is hydrogen-terminated.

5. The strain gauge according to claim 3, further comprising:
a field effect transistor (FET), wherein
a source electrode of the FET is arranged in a first end of the piezoresistive body,
a drain electrode of the FET is arranged in a second end of the piezoresistive body, and
a gate electrode of the FET is arranged between the first end and the second end of the piezoresistive body.

6. The strain gauge according to claim 5, wherein
the gate electrode controls an amount of holes of the piezoresistive body.

7. A pressure sensor comprising:
a diaphragm deformed under pressure; and
a strain gauge including a piezoresistive body of which a resistance value is changed based on an amount of the deformation of the diaphragm, wherein
the piezoresistive body includes a surface layer of diamond, and
the surface layer is hydrogen-terminated.

8. The pressure sensor according to claim 7, wherein
the diamond is insulating diamond, and
a portion of the surface layer is hydrogen-terminated.

9. The pressure sensor according to claim 7, wherein
the strain gauge includes a field effect transistor (FET),
a source electrode of the FET is arranged in a first end of the piezoresistive body,
a drain electrode of the FET is arranged in a second end of the piezoresistive body, and
a gate electrode of the FET is arranged between the first end and the second end of the piezoresistive body.

10. The pressure sensor according to claim 7, further comprising:
a temperature sensor which is formed of doped diamond and detects a temperature of the piezoresistive body.

11. The pressure sensor according to claim 7, further comprising:
a protection layer configured to cover a surface of the diamond.

12. The pressure sensor according to claim 9, wherein
the gate electrode controls an amount of holes of the piezoresistive body.

13. A method of forming a semiconductor device including a piezoresistive body of which a resistance value is changed by action of an external force, the method comprising:
hydrogen-terminating at least a portion of a surface layer of diamond with hydrogen plasma;
forming the hydrogen-terminated surface layer as a piezoresistive body; and
obtaining an electrical connection to the piezoresistive body through a metal film.

14. The method according to claim 13, further comprising:
forming a protection layer that protects a hydrogen-termination structure of a surface of the piezoresistive body.

15. A method of forming a semiconductor device including a piezoresistive body of which a resistance value is changed by action of an external force, the method comprising:
hydrogen-terminating at least a portion of a surface layer of diamond with hydrogen plasma;
forming a piezoresistive body serving as a hole channel of a field effect transistor (FET) on the hydrogen-terminated surface layer;
obtaining an electrical connection to the piezoresistive body through a metal film; and
forming a gate electrode which controls an amount of holes of the piezoresistive body on the hole channel.
